# EUROPÄISCHE PATENTSCHRIFT

(11) **EP 1 430 004 B1**
(45) Veröffentlichungstag und Bekanntmachung des Hinweises auf die Patenterteilung: **26.09.2007**
(21) Anmeldenummer: 02772057.2
(22) Anmeldetag: 13.09.2002
(51) Int. Cl.: C04B 35/622, C08B 1/00, C08J 3/21, D01F 1/02, D01F 2/02

(54) **VERFAHREN UND VORRICHTUNG ZUR KONTINUIERLICHEN HERSTELLUNG KERAMISCHER VLIESSTOFFE**
METHOD AND DEVICE FOR CONTINUOUS PRODUCTION OF CERAMIC NON-WOVENS
PROCEDE ET DISPOSITIF DE PRODUCTION EN CONTINU D'UN NON-TISSE EN CERAMIQUE

(30) Priorität: 15.09.2001 DE 10145639
(43) Veröffentlichungstag der Anmeldung: 23.06.2004
(73) Patentinhaber: THÜRINGISCHES INSTITUT FÜR TEXTIL- UND KUNSTSTOFF-FORSCHUNG e.V., 07407 Rudolstadt (DE)
(72) Erfinder: NIEMZ, Frank-Günter, 07407 Rudolstadt (DE); VORBACH, Dieter, 07407 Rudolstadt (DE)
(74) Vertreter: Plate, Jürgen
(86) Internationale Anmeldenummer: PCT/DE2002/003418
(87) Internationale Veröffentlichungsnummer: WO 2003/024890

(56) Entgegenhaltungen:
- EP-A- 0 712 889
- US-A- 5 827 797

## Beschreibung

Die vorliegende Erfindung betrifft ein Verfahren und eine Vorrichtung zur kontinuierlichen Herstellung von keramischen Vliesstoffen in unmittelbar hintereinander folgenden Herstellungsetappen. Dabei erfolgt die Erzeugung von Grünfasern nach einem Lösung-Suspensionsspinnverfahren. Die Herstellung des Vlieses erfolgt während der Herstellung der Grünfaser. Das Grünfaservlies kann in einem oder mehreren Schritten pyrolysiert und gesintert werden.

### [Stand der Technik]

Aus US 2 179 181 ist das Lösevermögen von tertiären Aminoxiden gegenüber Cellulose bekannt. Weiterhin ist in diesem Patent die Möglichkeit beschrieben aus der erhaltenen Cellulose-Aminoxidlösung durch Koagulation einen cellulosischen Formkörper, wie beispielsweise Fasern, Folien, Filamente, zu erhalten. Im weiteren wird zur Vereinfachung der Terminus "Aminoxidverfahren" zur Beschreibung des oben erklärten Prozesses benutzt.

In DE 44 26 966 ist die Möglichkeit der Herstellung von keramischen Grünfasern aus Lösungen der Cellulose in Aminoxid beschrieben, die bezüglich der Cellulose ein Vielfaches an feinen keramischen Pulvern enthalten. Die spezielle Eignung für die Herstellung keramischer Vliesstoffe ist darin nicht beschrieben.

Gegenstand der US 5 827 797 ist ein Verfahren zur Herstellung von keramischen Fasern nach dem Viskoseverfahren. Dabei wird eine Dispersion der keramischen Partikel mit Viskoselösung, d.h. mit einer stark alkalischen Cellulosexanthogenat-Lösung, vermischt und die Mischung zu Fasern versponnen. Das in den Fasern enthaltene Cellulosexanthogenat wird dann mit Hilfe von sauren Fällbadern zu Cellulose regeneriert. Beim anschließenden Pyrolysieren und Sintern werden keramische Fasern enthalten. Die kontinuierliche Herstellung eines Keramikvlieses ist aber mit der beschriebenen Anlage nicht möglich. Die Herstellung von Keramikvliesen aus Grünfasern nach dem Aminoxidverfahren ist in der US 5 827 797 nicht offenbart.

### [Aufgabe der Erfindung]

Die vorliegende Erfindung stellt sich die Aufgabe, ein Verfahren und eine Vorrichtung zur Herstellung keramischer Vliese zur Verfügung zu stellen, wobei als Zwischenprodukt eine Vlies aus keramischen Grünfasern, hergestellt nach dem Aminoxidverfahren, benutzt wird und der Prozeß weitgehend kontinuierlich abläuft. Weiterhin sollen die erhaltenen Keramikvliese auch mit unterschiedlicher Materialzusammensetzung durch die Auswahl der Technologie bzw. Technik sowie der eingesetzten Zusatzstoffe ein breites Spektrum an Packungsdichte, Gasdurchlässigkeit, mechanischer Beständigkeit und Geometrie abdecken.

Gelöst wurde die Aufgabe mit einem Verfahren zur Herstellung eines keramischen Vliesstoffs, dadurch gekennzeichnet, daß es die folgenden Schritte umfaßt:
a) Mischen von Keramikpulver, wäßrigem Aminoxid und Cellulose, so daß sich eine Suspension bildet;
b) Aufkonzentrieren der Suspension aus a), die unter Erwärmen gemischt, geschert und unter Abdampfen von Wasser transportiert wird, bis eine Suspension des Keramikpulvers in einer verformbaren Lösung von Cellulose in wäßrigem Aminoxid entstanden ist,
c) Verarbeiten der Suspension aus b) zu keramischen Grünfasern und Bilden eines Vlieses aus den Grünfasern;
d) Pyrolysieren und Sintern des aus den Grünfasern gebildeten Vlieses zu dem keramischen Vliesstoff.

Erfindungsgemäß wird dafür eine Vorrichtung zur kontinuierlichen Herstellung keramischer Vliesstoffe, umfassend
a) eine Mischvorrichtung, in der Keramikpulver, wäßriges Aminoxid und Cellulose zu einer Suspension gemischt wird;
b) eine Vorrichtung zum Aufkonzentrieren, in der die in a) hergestellte Suspension so lange unter Erwärmen intensiv gemischt, geschert und unter Abdampfen von Wasser transportiert wird, bis eine genau definierte Menge an Wasser abgedampft und eine Suspension von Keramikpulver in einer verformbaren Lösung der Cellulose in wäßrigem Aminoxid entsteht,
c) eine Vorrichtung, die mit der unter b) genannten verbunden ist, worin die Suspension von Keramikpulver in einer verformbaren Lösung der Cellulose in wäßrigem Aminoxid zu keramischen Grünfasern verarbeitet und aus den Grünfasern ein Grünfaservlies gebildet wird, und
d) eine Pyrolysier- und Sintereinrichtung, in der aus dem Grünfaservlies durch Pyrolysieren und Sintern ein keramischer Vliesstoff hergestellt wird.

Je nach gewünschter Vlieseigenschaft und eingesetzter Keramikpulver sind in den Vorrichtungen verschiedenartige Modifikationen denkbar.

Keramische Vliese bieten neben ihrer hervorragenden Chemikalienbeständigkeit den Vorteil, über lange Zeit eine absolute Stabilität gegenüber hohen Temperaturen aufzuweisen. So kann, je nach der Natur der eingesetzten Keramikpulver, thermische Beständigkeit über 2000 °C erreicht werden. Weiterhin kann durch die Prozeßführung der Sinterung, die Art des eingesetzten Keramikpulvers und weiterer Zusatzstoffe (z. B. Katalysatoren) ein breites Spektrum an Poren in den Fasern (von mehreren Mikrometern bis wenige Nanometer) geschaffen werden, so daß neben hoher chemischer und thermischer Stabilität eine steuerbare Porosität erzielt werden kann. So eröffnen sich für diese Vliese breite Anwendungsgebiete, wie vorzugsweise Trenn- und Filteraufgaben in den Bereichen der chemischen, energieerzeugenden sowie -recycelnden Industrie, der Kraftfahrzeugindustrie, der Biotechnologie und Medizintechnik. Sie werden in der Katalysatorentechnik (Verbrennungsmotorkatalysator) oder in chemischen Reaktoren usw. eingesetzt.

Es ist ebenso möglich, entweder im Prozeß der Grünfasererzeugung durch entsprechende Düsenauswahl und Einsatz verschiedener Keramikpulver/Keramik-Celluloselösungs-Suspension oder auch durch eine Mehrschichtbildung durch Nutzung verschiedener Grünfasern und anschließender Sinterung Mehrschichtstrukturen zu erzeugen. Dabei können die unterschiedlichen Schichten verschiedene Funktionen erfüllen (z. B. Filtration, Katalysator, Stützung).

### [Beispiele]

Im folgenden werden an Hand von Abbildungen verschiedene Ausführungsformen der Vorrichtungen und der dazugehörigen Technologie erläutert.

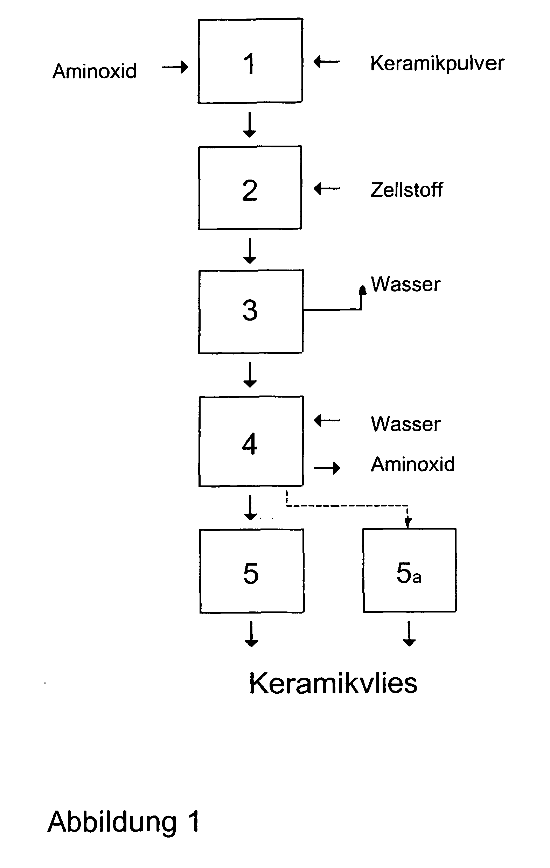

In Abbildung 1 ist das Zusammenspiel der Vorrichtungen zu erkennen. Dabei kann nach der Stufe c) die kontinuierliche Ausführung des Ablaufes unterbrochen und zeitlich oder örtlich modifiziert weitergeführt werden. Das einzusetzende Keramikpulver wird mit dem wäßrigen Aminoxid in einer Mischvorrichtung (1), die neben mechanischen Rühr- und Scherelementen auch eine Ultraschallbehandlung beinhalten kann, homogen gemischt. Danach wird die erhaltene Suspension in einer zweiten Mischeinrichtung (2) mit Zellstoff gemischt. Diese Prozesse können chargenweise in zwei oder mehr parallelen Apparaten erfolgen. Die bevorzugte Verfahrensausführung sieht eine kontinuierliche Herstellung der Keramikpulver/Cellulose/ wäßriges Aminoxid-Suspension (im weiteren als KCA-Maische bezeichnet) vor. Bei entsprechender Auswahl der Apparate können die Prozeßstufen, die in (1) und (2) ablaufen, in einem Apparat durchgeführt werden. Die KCA-Maische wird im Apparat (3) unter Scherung und Wärmezufuhr einem Vakuum ausgesetzt, wobei ein definierter Teil des in der Maische enthaltenen Wassers verdampft wird. Als Resultat entsteht eine Keramikpulver-Celluloselösungs-Suspension (im weiteren als KCL-Suspension bezeichnet), die fadenbildenden Charakter besitzt. Dieser Prozeß bevorzugte Verfahrensausführung sieht aber die kontinuierliche Herstellung der KCL-Suspension vor. Die erhaltene KCL-Suspension wird nun in einer Vorrichtung (4) zu Fasern versponnen. Dabei wird die KCL-Suspension durch ein Formwerkzeug (Spinndüse) durch einen Luftspalt oder direkt in eine Fällflüssigkeit gepreßt, die entstandenen Fasern vom anhaftendem Aminoxid mit Waschwasser ausgewaschen, gegebenenfalls mit einem Nachbehandlungsbad ausgerüstet, bedarfsweise geschnitten und anschließend getrocknet. Entstehendes verdünntes überschüssiges Aminoxid kann in einer hier nicht gezeigten Vorrichtung gereinigt und aufkonzentriert und in der Vorrichtung (1) wieder zugesetzt werden. Die Vorrichtung (4) ist so gestaltet, daß ein Grünfaservlies erhalten wird, welches direkt in eine Vorrichtung (5) eingespeist wird. Dort wird das Grünvlies, gegebenenfalls in mehreren Abschnitte zu Keramikvliesen pyrolysiert und gesintert.

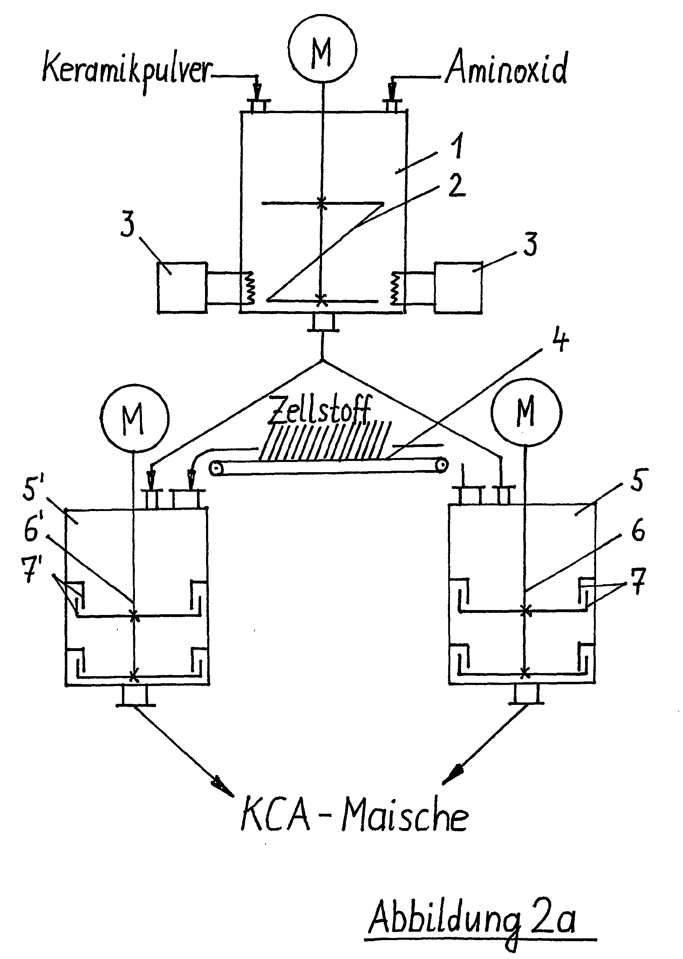

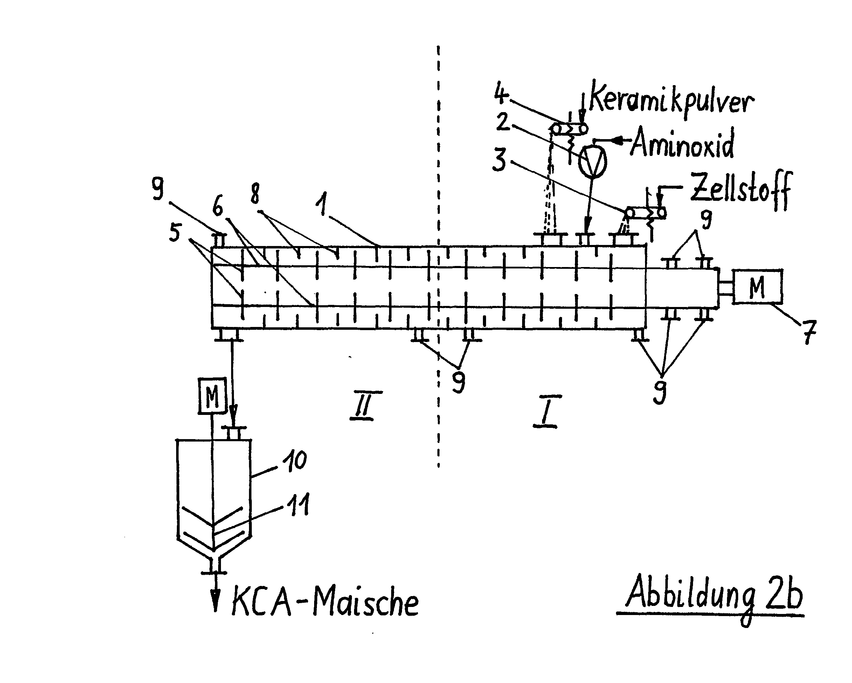

In Abbildung 2a ist ein diskontinuierlicher Herstellungsprozeß der KCA- Maische dargestellt. Dabei wird aus der wäßrige Aminoxidlösung und Keramikpulver in einem Mischaggregat (1) mit Hilfe eines Rührers (2) und Ultraschallgebern (3) eine Suspension hergestellt. Nach Fertigstellung der Suspension wird diese wahlweise in die Mischbehälter (5) und (5') gegeben. Mit Hilfe eines Aufgabebandes (4) wird eine vorgegebene Menge Zellstoff ebenfalls in die Mischbehälter (5) bzw. (5') vorgelegt, wo diese unter intensiven Mischen m. H. der Rührer (6)/(6') und Schikanen (7)/(7') zur KCA-Maische verarbeitet werden.

In Abbildung 2b ist ein kontinuierlicher-Herstellungsprozeß der KCA-Maische dargestellt. Der benutzte Apparat kann ein Zwei- oder Mehrwellenapparat sein. Ein Beispiel der Ausführungsform ist ein zweiwelliger Apparat der Serie CRP der Fa. List (CH). Der Wellenapparat (1) ist in zwei Sektionen unterteilt. In der Sektion I erfolgt die kontinuierliche Zugabe von Aminoxid, Keramikpulver und Zellstoff. Die Dosierung erfolgt durchsatz- und mengengesteuert durch eine geregelte Pumpe (2) für das wäßrige Aminoxid und über Wägeeinheiten (3) und (4) für den Zellstoff bzw. das Keramikpulver.

Der Wellenapparat ist so beschaffen, daß durch die Anordnung der Wellenelemente (5) der mit dem Motor (7) angetriebenen Wellen 6 und gegebenenfalls eingebauter Schikanen (8) am Gehäuse sowohl ein Transport, eine Zerkleinerung der Zellstoffblätter als auch eine homogene Vermischung der drei Komponenten in der Sektion II stattfinden kann. Der Apparat kann gegebenenfalls über die Welle und/oder das Gehäuse temperiert (Stutzen 9) werden. Die entstandene KCA-Maische kann zur weiteren Verarbeitung über einem Zwischenbehälter (10) mit Rührwerk (11) zwischengespeichert werden.

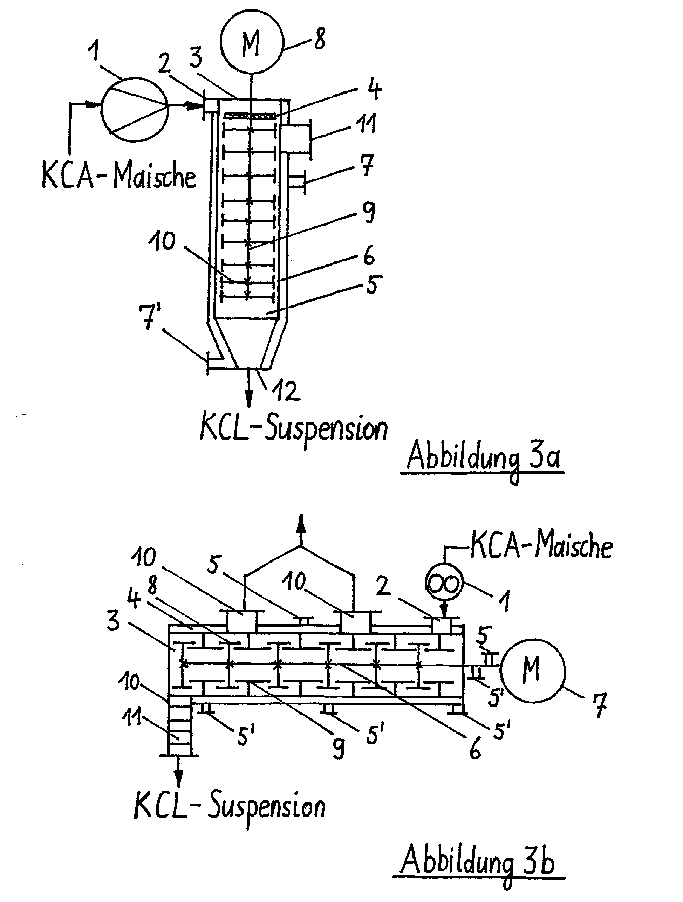

Abbildung 3a zeigt eine Vorrichtung zur Umwandlung der KeramikpulverCellulose-Suspension (KCA-Maische) in eine Suspension des Keramikpulvers in einer Celluloselösung (KCL-Suspension) in Form eines handelsüblichen Dünnschichtverdampfers, z. B. ein Filmtruder der Fa. Buss (CH). Die KCA-Maische gelangt über eine Dosierpumpe (1) durch den Stutzen (2) in den Dünnschichtverdampfer (3). Über den Verteilerring (4) wird die Maische so verteilt, daß sie in einer gleichmäßigen Schicht an der feststehenden Innenwand (5) des Dünnschichters aufgetragen wird. Die Innenwand (5) ist mit einem Heizmantel (6) mit Zu- und Ableitung eines Heizmediums (7,7') ausgerüstet, über den der Apparat temperiert wird. Dabei können mehrere Temperaturzonen gebildet werden (nicht dargestellt). Weiterhin besitzt der Apparat einen Antrieb (8) für die Welle (9), auf welcher sich mehrere Rotorblätter (10) befinden. Die Stellung und Gestaltung der Rotorblätter kann so gewählt werden, daß ihre Stellung parallel oder unter einem Neigungswinkel zur Welle eingestellt werden können. Die Rotorblätter garantieren durch ihren radialen und über die Apparatelänge konstanten oder variierbaren Abstand zur Innenwand bei Rotation eine Scher- und Mischbeanspruchung der Lösung. Dies und das am Stutzen (11) angelegte Betriebsvakuum leiten neben einer über den Radius gleichmäßigen Wasserverdampfung den Übergang der KCA-Maische zur KCL-Suspension ein. Am Ausgang (12) verläßt die KCL-Suspension den Apparat.

Abbildung 3b zeigt eine Vorrichtung zur Umwandlung der KeramikpulverCellulose-Suspension in eine Suspension des Keramikpulvers in einer Celluloselösung in Form eines handelsüblichen einwelligen Dickschichtverdampfers, z.B. der Serie Discotherm der Fa. List (CH). Es eignen sich aber auch Apparate mit zwei oder mehr Wellen (z. B. CRP der Fa. List (CH)). In der Abbildung 3b ist der Einfachheit halber ein Einwellenapparat dargestellt. Die KCA-Maische gelangt über eine Dosierpumpe (1) durch den Stutzen (2) in den Wellenapparat (3). Der Apparat ist über Doppelmantel (4) mit Zu- und Ableitung eines Heizmediums (5,5') ausgerüstet, über den der Apparat temperiert wird. Dabei können mehrere Temperaturzonen gebildet werden. Ähnliches Temperieren ist über die Welle (6) realisierbar. Die Welle (6) wird durch den Motor (7) angetrieben und ist mit kompakten Hakenelementen (8) bestückt. Zur Intensivierung des Prozesses sind zwischen den bewegten Hakenelementen (8) an der Wand des Apparates Gegenhaken (9) installiert. Das Zusammenspiel der Scherspalte Haken/Gegenhaken, eingetragener Energie durch die Drehung und Scherung sowie Heizmedium und angelegtem Vakuum am Stutzen (10) ermöglicht die Überführung der KCA-Maische in eine fadenbildende KCL-Suspension. Die Suspension tritt am Stutzen (10) mit Hilfe einer Fördereinrichtung (11) aus.

Die erhaltene KCL-Suspension kann nach verschiedenen Spinn- und Nachbehandlungsverfahren zu keramischen Grünfasern bzw. -vliesen verarbeitet werden. In Folge sollen anhand von Abbildungen verschiedene geeignete Spinn- und daraus resultierend Nachbehandlungsysteme beschrieben werden.

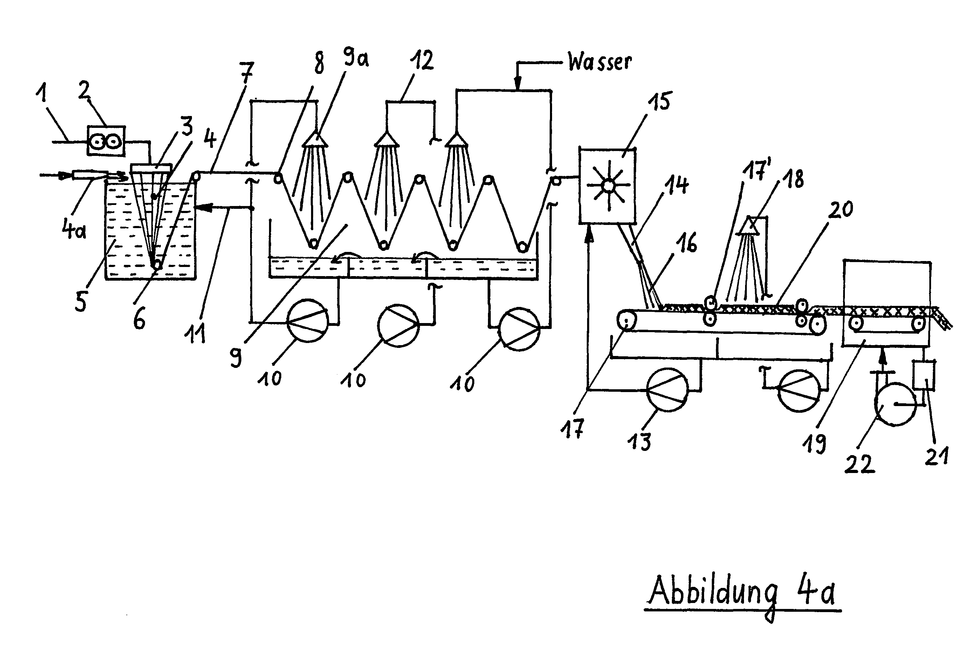

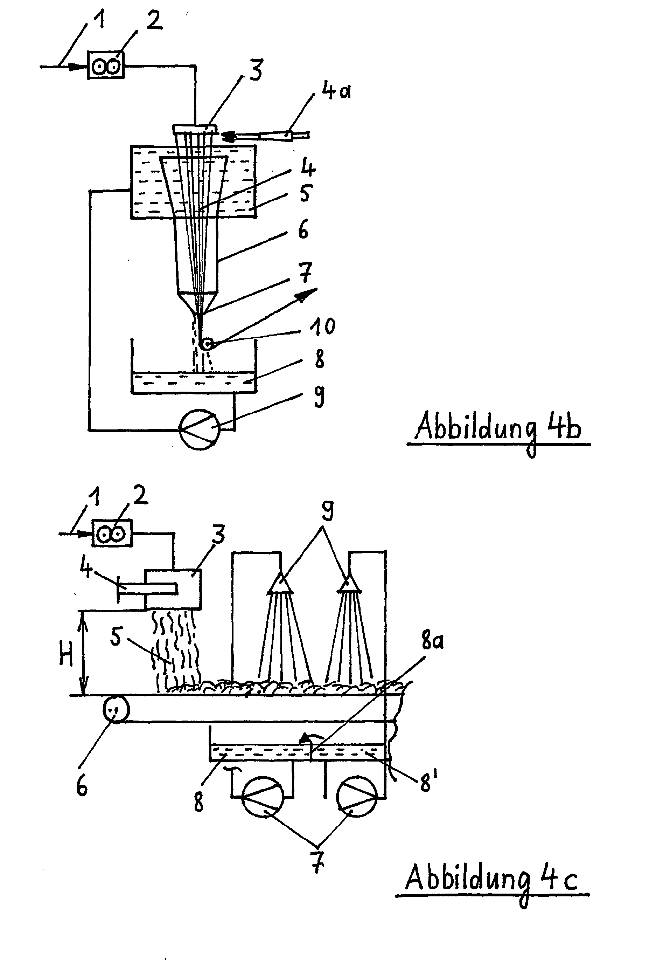

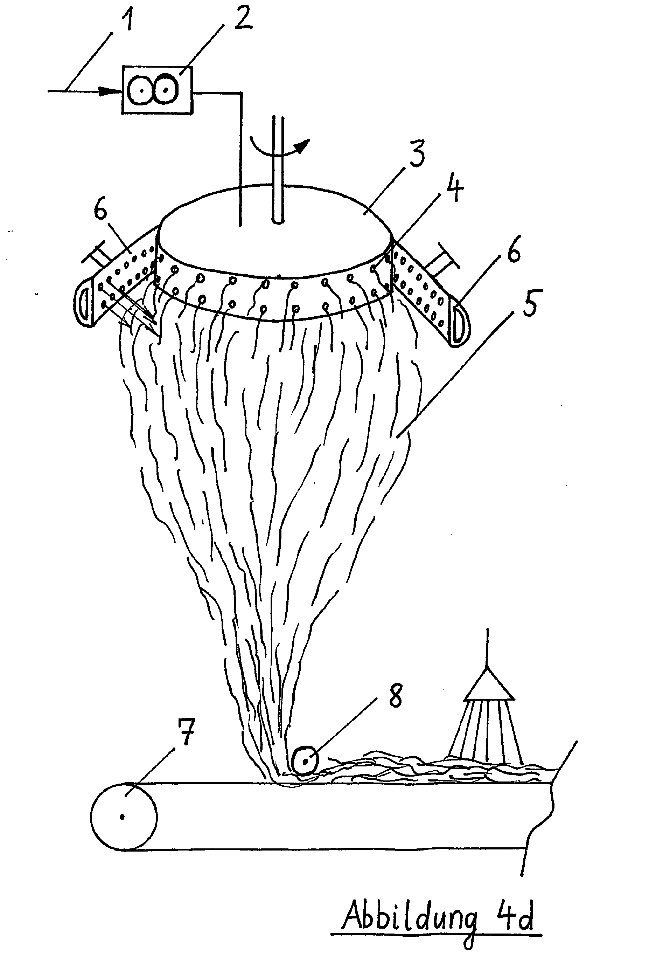

Das benutzte Spinnverfahren kann in der Ausführungsform ein Naß- oder Trocken-Naßspinnverfahren sein, wie sie aus der Herstellung von Lyocell-Fasern und Filamenten bekannt sind. Dabei kann sowohl ein Wannenspinnverfahren (Abbildung 4a) als auch ein Trichterspinnverfahren (Abbildung 4b) benutzt werden. Diese Spinnverfahren liefern in der Regel bezüglich des Querschnittes und der Länge homogene Fasern. Ein weiterer Vorteil bei diesem Verfahren ist, daß profilierte Fasern (Hohlfasern, mehrschichtige Fasern) durch die Düsengestaltung herstellbar sind.

Eine weitere Ausführungsform der Bildung von keramischen Grünfasern aus Celluloselösungen ist ein Blasspinnverfahren oder dessen Modifizierung (Abbildung 4c). Auch mit einem in vielen Bereichen der Technik eingesetzten Zentrifugalspinnverfahren (Abbildung 4d) ist die Herstellung von Keramikgrünfasern möglich. Diese Verfahren liefern in der Regel Fasern, die ein breites Spektrum bezüglich Querschnitt und Faserlänge bieten.

Beim Wannenspinnverfahren (Abb. 4a) gelangt die KCL-Suspension durch eine mit einem Wärmeträger temperierte Doppelmantel-Rohrleitung (1) zur Dosierpumpe (2), die die Suspension durch eine Spinndüse (3) drückt. Die Spinndüse kann rund oder viereckig, mit gleichmäßig verteilten oder auf bestimmten Flächen konzentrierten (z. B. Hütchen) Bohrungen ausgestattet, eingesetzt werden. Nach Austritt aus den Bohrungen wird das Extrudat entweder durch einen Luftspalt (4), wo es gegebenenfalls mit einem Luftstrom (4a) angeblasen werden kann, oder direkt in das Fällbad (5) gesponnen. Im Fällbad erfolgt die Koagulation der KCL-Suspension zu stabilen Endlosfäden. Die Einzelfäden werden durch die Umlenkrolle (6) als Kabel (7) zusammengefaßt und durch die Abzugs- und Umlenkgaletten (8) in die Kabelwäsche (9) geleitet. Diese kann in mehrere Sektionen unterteilt sein. In den Sektionen erfolgt das Auswaschen des anhaftenden Aminoxides durch die mit einer Umlaufpumpe (10) auf eine Badverteilung (9a) geleitete aminoxidhaltige Waschflüssigkeit. Der Überschuß der Waschflüssigkeit, der aus einer ständigen Frischwasserzugabe (12) an der letzten Sektion der Kabelwäsche resultiert, wird über die Verbindung (11) dem Fällbad zugesetzt und wird letztendlich von dort, durch das eingetragene Aminoxid der KCL-Suspension angereichert, einer Reinigungs- und Rückgewinnungsvorrichtung (nicht dargestellt) zugeführt, von wo aus es dem Herstellungsprozeß der KCA-Maische bzw. der KCL-Suspension wieder zugesetzt werden kann. Nach Passieren der Kabelwäsche wird das Kabel in einer Schneidmaschine (15), z. B. einer Injektorschneidmaschine der Fa. Maurer (CH), mit Schneidmessern und Schwemmwasser, was durch eine Umwälzpumpe (13) geliefert wird, in Fasern (16) definierter Schnittlänge geschnitten und auf ein umlaufendes Siebband (17) gespült. Ein solches Siebband stellt beispielsweise die Fa. Fleissner (D) her. Eine gleichmäßige Verteilung der Faser über die Siebbandbreite kann über einen Schwenkrüssel (14) erfolgen. Durch die Änderung der Geschwindigkeit des Siebbandes (17) kann eine Variation der Vliesdicke erfolgen. Das Siebband besitzt zwischen einzelnen Sektionen Abquetschwalzen (17'), die eine Verschleppung verschiedener Flüssigkeiten in Grenzen halten. Es können mehrere Sektionen mit separaten Umlauf- und Badsystemen realisiert sein. Weiterhin besteht die Variante, daß anstatt der Kabelwäsche (9) direkt nach dem Verlassen des Fällbades (5) eine Schneidmaschine installiert ist und die Auswaschung des Aminoxides in einer oder mehreren Sektionen des Siebbandes (17) erfolgt. Am Ende des Siebbandes kann eine Applikation des Faservlieses mit einer Spezialchemikalie oder -suspension durch Besprühen mit dem Sprühkopf (18) erfolgen. Ebenfalls ist die Aufbringung der Chemikalie/Suspension durch ein vorher beschriebenes Umlauf-/ Berieselungssystem möglich. Das Siebband besitzt zwischen den verschiedenen Sektionen und am Ende einstellbare Quetschwalzen (20), mit denen die Grünvliesdichte eingestellt werden kann. Am Ende des Siebbandes (17) ist ein Trocknungsaggregat (19) installiert, womit das gebildete kompakte Faservlies 20 getrocknet wird. Die Beheizung des Trockners kann über Wärmetauscher / Heizregister (21), über die Luft m. H. des Gebläses (22) geleitet wird, erfolgen. Das trockene Vlies bzw. die getrocknete Grünfaser wird im Anschluß unmittelbar zu Keramikvliesen weiterverarbeitet bzw. kann verpackt und räumlich und zeitlich getrennt zu Keramikvliesen verarbeitet werden.

Beim Trichterspinnverfahren, Abb. 4b, gelangt die KCL-Suspension durch eine mit einem Wärmeträger temperierte Doppelmantel-Rohrleitung (1) zur Dosierpumpe (2), die die Suspension durch eine Spinndüse (3) drückt. Die Spinndüse ist vorzugsweise rund und mit gleichmäßig verteilten oder auf bestimmten Flächen konzentrierten (z. B. Hütchen) Bohrungen ausgestattet. Nach Austritt aus den Bohrungen wird das Extrudat entweder durch einen Luftspalt , wo es gegebenenfalls mit einem Luftstrom (4a) angeblasen werden kann, in ein Fällbad (5) oder direkt in das Fällbad (5) gesponnen. Das Fällbad (5) ist so gestaltet, daß in das Bad ein konisch zulaufender Trichter (6) mit einem Injektor (7) so eingebaut ist, daß die extrudierten Endlosfäden (4) zusammen mit der durch die Umlaufpumpe (9) aus einer Auffangwanne (8) eingespeister Fällbadflüssigkeit in Transportrichtung beschleunigt den Injektor am unteren Ende des Trichters verlassen. Das durch die Umlenkung (10) gebündelte Faserkabel (11) wird nun, wie in Abb.4a beschrieben, entweder in Form eines Kabels ausgewaschen, geschnitten, nachbehandelt und als Vlies getrocknet oder unmittelbar im Anschluß an Umlenkung 10 geschnitten und als Vlies gewaschen, nachbehandelt, getrocknet und weiterverarbeitet.

Abbildung 4c zeigt die Möglichkeit der Nutzung des Blasspinnverfahrens zur Erzeugung von keramischen Grünvliesen. Die KCL-Suspension gelangt durch eine mit einem Wärmeträger temperierte Doppelmantel-Rohrleitung (1) zur Dosierpumpe (2), die die Suspension durch einen Spinnblock (3) drückt. Die Bohrungen im Spinnblock sind gleichmäßig verteilt. Die KCL-Suspension wird mit Hilfe von radial um die Bohrungen austretender Blasluft, die durch den Stutzen (4) in den Block eingespeist wird, und dem Förderdruck der Pumpe (2) herausgeblasen. Die entstehenden Faserstücke (5), die z. T. miteinander an den Kontaktstellen verklebt sind, fallen auf ein Siebband (6). Die Faserstücke zeichnen sich durch über die Länge variable Querschnitte und ebenfalls variable Längen aus. Diese Größen können mit Hilfe der Durchsätze Suspension und Blasluft sowie der Geometrie der Bohrungen und der Fallhöhe H der Fasern gesteuert werden. Weiterhin ist durch diese Technik eine gleichmäßige Wirrlage der Fasern auf dem Siebband sichergestellt. Auf dem Siebband wird die Faser mit Hilfe der Umwälzpumpe (7) aus dem Sumpf (8), (8') und Berieselungseinrichtungen (9) ausgewaschen. Die verschiedenen Berieselungssektionen sind durch Kaskaden (8a) miteinander verbunden. Frischwasser wird am Ende der Wäsche eingespeist, Überschußbad gelangt in die Reinigung und Rückgewinnung (nicht dargestellt). Die Fasern (5) können auch schon während des Fallens auf Siebband (6) mit Waschflüssigkeit besprüht werden. Im Anschluß (nicht gezeigt, da Prozesse analog Verfahrensführung in Abb. 4a beschrieben) erfolgen Nachbehandlung, Trocknung und Konfektionierung des Grünfaservlieses.

Abbildung 4d zeigt die Möglichkeit der Nutzung des Zentrifugalspinnverfahrens zur Erzeugung von keramischen Grünvliesen. Bei diesem Spinnverfahren gelangt die KCL-Suspension durch eine mit einem Wärmeträger temperierte Doppelmantel-Rohrleitung (1) zur Dosierpumpe (2), die die Suspension in eine rotierende perforierte Trommel (3) fördert. Die Suspension wird durch die Zentrifugalkraft durch die Perforationsbohrungen (4) gepreßt. Eine weitere, nicht dargestellte Variante des Zentrifugalverfahrens geht davon aus, daß die rotierende Trommel durch eine Hohlwalze ohne Bohrungen ersetzt wird und die Lösung durch einen wenige Mikrometer betragenden Scherspalt zwischen der Hohlwalze und einer unter ihr befindlichen feststehenden Scheibe geschleudert wird. Mit dieser Variante des Zentrifugalspinnens sind besonders feine Fasern erspinnbar. Die entstehenden Fasern (5), die z. T. an den Kontaktstellen miteinander verklebt sind, werden mit Waschflüssigkeit, die Wasser oder verdünnte Aminoxidlösung sein kann, aus einem Sprühsystem (6) besprüht und fallen in einem wirren Verband vereint auf Siebband (7) mit einer Umlenkrolle (8), wo eine wie in den vorherigen Beispielen Wäsche und Nachbehandlung realisiert wird. Das entstandene Vlies wird getrocknet. Diese Prozesse wurden wegen ihrer Analogie in den vorangegangenen Abbildungen 4a bis 4c nicht dargestellt.

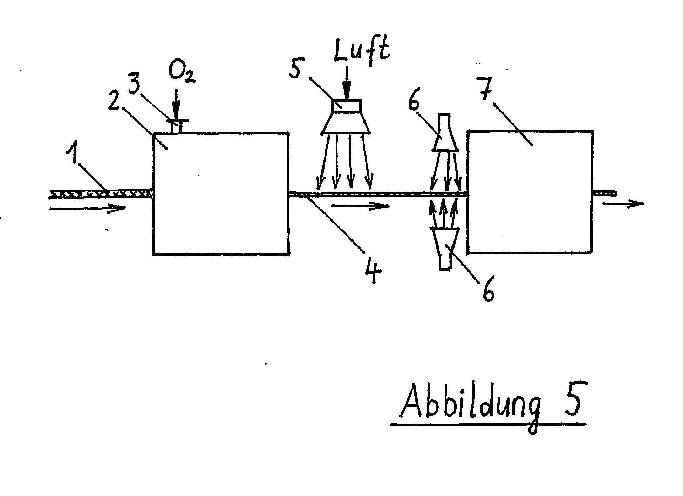

Abbildung 5 zeigt eine Vorrichtung zur Pyrolyse und Sinterung eines keramischen Grünfaservlieses. Das Vlies (1) wird in einen kontinuierlichen Ofen (2), wie sie zur Keramikherstellung genutzt werden, eingeleitet. In diesem sind die Bedingungen so gewählt, daß je nach Zusammensetzung des Vlieses und des eingesetzten Keramikpulvers im ersten Ofenteil unter Sauerstoff (Luft)-Zufuhr (3) die Cellulose vollständig pyrolysiert wird. Im zweiten Ofenteil passiert das Vlies die eigentliche Sinterstrecke und die Keramikfasern erhalten ihre Eigenschaften. Je nach eingesetzten Keramikpulvern und Nachbehandlungschemikalien können die Fasern an ihren Kontaktstellen miteinander versintert sein. In diesem Fall ist das Keramikvlies als Endprodukt (4) erhaltbar und kann einer Konfektionierung (Schneiden, Verpacken) zugeführt werden. Falls die für ein mechanisch stabiles Vlies erforderliche Verbundhaftung zwischen den Fasern noch nicht ausreichend ist, sind weitere Operationen notwendig. Dabei wird das Vlies nach Verlassen des Ofens z. B. mit Luft (5) abgekühlt und mit einer zusätzlichen Sinterflüssgkeit (6) benetzt. Danach durchläuft es zum zweiten mal einen Ofen (7), wo nacheinander die Prozesse Trocknung, gegebenenfalls Pyrolyse und Sinterung des Sinterhilfsmittels abläuft. Das den Ofen (7) verlassende formstabile Keramikvlies wird nun konfektioniert. Weiterhin ist denkbar, daß das Keramikvlies mit Stoffen mit funktionellen Gruppen in Kontakt gebracht und anschließend einer Temperaturbehandlung ausgesetzt wird.

Es stellte sich heraus, daß die KCL-Suspension zur Verarbeitung in den verschiedenen beschriebenen Aggregaten und Technologien zu einer stabilen Erspinnung und Erzeugung von Grünfasern mit ausreichenden Eigenschaften einen Cellulosegehalt zwischen 0,5 - 12 % (Ma.) aufweisen kann. Vorzugsweise liegt der Gehalt zwischen 1,5 und 8 %. Im Prozeß eignen sich die für eine Viskosefaserproduktion geeignetet Dissolving-Zellstoffe, Baumwolllinters ebenso wie Papierzellstoffe mit niedrigem oder mittleren DP (bis 2000). Dabei ist es unerheblich, mit welchem Herstellungsverfahren die Zellstoffe hergestellt wurden. Der keramische Anteil in der Lösung sollte zwischen 50 und 5000 % bezogen auf Cellulose sein, wobei der Vorzugsbereich 100 - 3000% beträgt. Die keramischen Pulver sollten in ihrer mittleren Korngröße mindestens 1 Größenordnungen kleiner als die Durchmesser der erhaltenen Grünfasern sein. Zur Verarbeitung nach den beschriebenen Verfahren eignen sich alle zu dem System wäßriges Aminoxid-Cellulose nahezu innert verhaltende Pulver aus Oxiden (vorzugsweise Metalloxide, wie z.B. Aluminiumoxide, Siliziumoxide, Titanoxide, Strontiumoxide usw.), Carbiden, Boriden, Nitriden, Oxynitriden, Sialonen, und Aluminiumsilikaten. Weiterhin können alle keramikbildende niedrig- oder hochmolekularen Verbindungen, sinterfähige anorganische Verbindungen, Bleizirkoniumtitanate eingesetzt werden. Es stellte sich heraus, daß die beste Prozeßführung mit tertiären Aminoxiden, vorzugsweise mit N-Methylmorpholin-N-Oxid, als Lösungsmittel für die Cellulose verzeichnet wird. Zur Stabilisierung der Suspension können Substanzen zugesetzt werden, die eine thermische Zersetzung verhindern. So kann beispielsweise ein Stabilisatorensystem aus Natronlauge oder aus Natronlauge und Gallussäurepropylester mit gegebenenfalls weiteren stabilisierend wirkenden Substanzen benutzt werden.

### [Bezugszeichenliste]

### Abbildung 1:

- 1: Mischvorrichtung 1 (Keramikpulver / wäßriges Aminoxid)
- 2: Mischvorrichtung 2 (Zellstoffzumischung)
- 3: Apparat 3 (Vakuum / Wasserverdampfung)
- 4: Vorrichtung zur Faserverspinnung
- 5 a: Vorrichtung Grünfaservliesherstellung
- 5: Pyrolyse- und Sintervorrichtung

### Abbildung 2a:

- 1: Mischaggregat
- 2: Rührer
- 3: Ultraschallgeber
- 4: Aufgabeband
- 5 und 5': Mischbehälter
- 6 und 6': Rührer
- 7 und 7': Schikanen

### Abbildung 2b:

- 1: Wellenapparat
- 2: Dosierungspumpe
- 3: Wägeeinheit für Zellstoff
- 4: Wägeeinheit für Keramikpulver
- 5: Wellenelemente
- 6: Welle
- 7: Antriebsmotor
- 8: Schikanen
- 9: Anschlußstutzen
- 10: Zwischenbehälter
- 11: Rührwerk

### Abbildung 3a:

- 1: Dosierpumpe
- 2: Stutzen für KCA-Maische
- 3: Dünnschichtverdampfer
- 4: Verteilerring
- 5: Innenwand
- 6: Heizmantel
- 7: Heizmediumzuleitung
- 7: Heizmediumableitung
- 8: Antrieb
- 9: Welle
- 10: Rotorblätter
- 11: Stutzen für Vakuum
- 12: Ausgang

### Abbildung 3b:

- 1: Dosierpumpe
- 2: Stutzen (KCA-Maische)
- 3: Wellenapparat
- 4: Doppelmantel
- 5: Zuleitung Heizmedium
- 5': Ableitung Heizmedium
- 6: Welle
- 7: Antriebsmotor
- 8: Hakenelemente
- 9: Gegenhaken
- 10: Stutzen (Vakuum)
- 11: Fördereinrichtung

### Abbildung 4a

- 1: Doppelmantel-Rohrleitung
- 2: Dosierpumpe
- 3: Spinndüse
- 4: Luftspalt
- 4a: Luftstrom
- 5: Fällbad
- 6: Umlenkrolle
- 7: Kabel (zusammengefaßte Einzelfäden)
- 8: Abzugs- und Umlenkgaletten
- 9: Kabelwäsche
- 9a: Badverteilung
- 10: Umlaufpumpe
- 11: Waschflüssigkeitsüberschuß
- 12: Frischwasserzugabe
- 13: Umwälzpumpe
- 14: Schwenkrüssel
- 15: Kabelschneidmaschine
- 16: geschnittene Fasern
- 17: Siebband
- 17': Abquetschwalzen
- 18: Sprühkopf
- 19: Trocknungsaggregat
- 20: Faservlies
- 21: Heizregister
- 22: Gebläse

### Abbildung 4b

- 1: Doppelmantel-Rohrleitung
- 2: Dosierpumpe
- 3: Spinndüse
- 4: extrudierte Endlosfäden
- 4a: Luftstrom
- 5: Fällbad
- 6: Trichter
- 7: Injektor
- 8: Auffangwanne
- 9: Umlaufpumpe
- 10: Umlenkung
- 11: Faserkabel

### Abbildung 4c

- 1: Doppelmantel-Rohrleitung
- 2: Dosierpumpe
- 3: Spinnblock
- 4: Stutzen
- 5: Faserstücke
- 6: Siebband
- 7: Umwälzpumpe
- 8 und 8': Sumpf
- 8a: Kaskaden
- 9: Berieselungseinrichtungen

### Abbildung 4d

- 1: Rohrleitung
- 2: Dosierpumpe
- 3: Rotationstrommel
- 4: Perforationsbohrungen
- 5: Fasern
- 6: Sprühsystem
- 7: Siebband
- 8: Umlenkrolle

### Abbildung 5

- 1: Vlies
- 2: Ofen 1
- 3: Sauerstoff/Luft-Zufuhr
- 4: Keramikvlies-Endprodukt
- 5: Luftabkühlung
- 6: Sinterflüssigkeit
- 7: Ofen 2

## Patentansprüche

1. Verfahren zur kontinuierlichen Herstellung eines keramischen Vliesstoffs, **dadurch gekennzeichnet, daß** es die folgenden Schritte umfaßt:
a) Mischen von Keramikpulver, wäßrigem Aminoxid und Cellulose, so daß sich eine Suspension bildet;
b) Aufkonzentrieren der Suspension aus a), die unter Erwärmen gemischt, geschert und unter Abdampfen von Wasser transportiert wird, bis eine Suspension des Keramikpulvers in einer verformbaren Lösung von Cellulose in wäßrigem Aminoxid entstanden ist,
c) Verarbeiten der Suspension aus b) zu keramischen Grünfasern und Bilden eines Vlieses aus den Grünfasern sowie Trocknen des aus den Grünfasern gebildeten Vlieses;
d) Pyrolysieren und Sintern des aus den Grünfasern gebildeten Vlieses zu dem keramischen Vliesstoff.

2. Verfahren nach Anspruch 1, **dadurch gekennzeichnet, daß** in Schritt a) ein Keramikpulver aus Oxiden, Carbiden, Boriden, Nitriden, Oxynitriden, Sialonen und/oder aus Aluminiumsilikaten oder deren Mischungen und/oder aus keramikbildenden niedrig- oder hochmolekularen Verbindungen und/oder sinterfähigen anorganischen Verbindungen und/oder Bleizirkoniumtitanaten eingesetzt wird.

3. Verfahren nach Anspruch 1, **dadurch gekennzeichnet, daß** in Schritt a) die Cellulose in Form von Dissolving- oder Papierzellstoff, Baumwoll-Linters oder Mischungen davon eingesetzt wird.

4. Verfahren nach den Ansprüchen 1 bis 3, **dadurch gekennzeichnet, daß** als Aminoxid N-Methylmorpholin-N-Oxid eingesetzt wird.

5. Verfahren nach Anspruch 1, **dadurch gekennzeichnet, daß** der Anteil der Cellulose in der in Schritt b) erzeugten Suspension 0,5 bis 12 Gew.-%, vorzugsweise von 1,5 bis 8 Gew.-%, bezogen auf das Gewicht der Suspension, beträgt.

6. Verfahren nach Anspruch 1, **dadurch gekennzeichnet, daß** der Anteil des Keramikpulvers in Schritt b) 10 bis 5000 Gew.-%, vorzugsweise 50 bis 3000 Gew.-%, bezogen auf das Gewicht der Cellulose, beträgt.

7. Verfahren nach den Ansprüchen 1 bis 6, **dadurch gekennzeichnet, daß** das in Schritt a) eingesetzte Keramikpulver eine mittlere Korngröße aufweist, die mindestens eine Größenordnung kleiner ist als der Durchmesser der trockenen Grünfasern aus Schritt c).

8. Verfahren nach Anspruch 1, **dadurch gekennzeichnet, daß** in Schritt a) neben dem Mischen eine Ultraschallbehandlung durchgeführt wird.

9. Verfahren nach Anspruch 1, **dadurch gekennzeichnet, daß** die keramischen Grünfasern in Schritt c) nach einem Naß-, Trocken-Naß-, Wannen-, Trichter-, Blas- oder Zentrifugal-Spinnverfahren hergestellt werden.

10. Verfahren nach den Ansprüchen 1 bis 9, **dadurch gekennzeichnet, daß** die Extrusionstechnik so ausgewählt wird, daß runde und/oder profilierte und/oder mehrschichtige und/oder hohle keramische Grünfasern erhalten werden.

11. Verfahren nach den Ansprüchen 1 bis 10, **dadurch gekennzeichnet, daß** das Auswaschen des Aminoxides im Faserkabelverband realisiert wird.

12. Verfahren nach Anspruch 11, **dadurch gekennzeichnet, daß** am Ende der Kabelwäsche das Kabel zu Fasern definierter Länge geschnitten und ein Faservlies auf einem Siebband gebildet wird, wo gegebenenfalls eine Nachbehandlungsflüssigkeit aufgebracht wird.

13. Verfahren nach den Ansprüchen 1 bis 12, **dadurch gekennzeichnet, daß** das Schneiden des Faserkabels direkt nach der Erspinnung erfolgt und ein Faservlies gebildet wird.

14. Verfahren nach den Ansprüchen 1 bis 13, **dadurch gekennzeichnet, daß** das kontinuierliche Auswaschen des Aminoxides und gegebenenfalls das Auftragen einer Nachbehandlungsflüssigkeit im Faservlies auf einem Siebband erfolgt.

15. Verfahren nach den Ansprüchen 1 bis 14, **dadurch gekennzeichnet, daß** der entstehende Faserverband auf ein Siebband abgelegt, das Aminoxid ausgewaschen und gegebenenfalls eine Nachbehandlungsflüssigkeit aufgebracht wird.

16. Verfahren nach den Ansprüchen 1 bis 15, **dadurch gekennzeichnet, daß** das Siebband in verschiedene Sektionen unterteilt ist und daß sich zwischen den Sektionen und am Ende des Siebbandes einstellbare Quetschwalzen befinden, durch die der Faserverband abgequetscht wird.

17. Verfahren nach den Ansprüchen 1 bis 16, **dadurch gekennzeichnet, daß** das feuchte Keramikgrünvlies in einem Umlufttrockenaggregat, das vorzugsweise ein Siebbandtrockner ist, getrocknet wird.

18. Verfahren nach den Ansprüchen 1 bis 17, **dadurch gekennzeichnet, daß** das trockene Keramikvlies direkt im Schritt d) weiterverarbeitet oder verpackt und extern verarbeitet oder als Faser verpreßt extern verarbeitet wird.

19. Verfahren nach den Ansprüchen 1 bis 18, **dadurch gekennzeichnet, daß** das Keramik-Grünvlies in mehreren Schichten gebildet wird, die sich durch das eingesetzte Keramikpulver unterscheiden.

20. Verfahren nach den Ansprüchen 1 bis 18, **dadurch gekennzeichnet, daß** in Schritt d) das Keramikgrünfaservlies in einem Ofen kontinuierlich zu einem Keramikvlies pyrolysiert und gesintert wird.

21. Verfahren nach den Ansprüchen 1 bis 20, **dadurch gekennzeichnet, daß** das entstandene Keramikvlies abgekühlt, mit einer zusätzlichen Sinterflüssigkeit getränkt wird und erneut einen Sinterprozess in einem weiteren Ofen durchläuft.

22. Verfahren nach Anspruch 21, **dadurch gekennzeichnet, daß** die Sinterflüssigkeit aus einer Dispersion eines sinterfähigen Pulvers oder eines sinterfähigen Sols besteht.

23. Verfahren nach den Ansprüchen 1 bis 22, **dadurch gekennzeichnet, daß** das Keramikvlies mit funktionellen Stoffen, z. B. Katalysatoren, kontaktiert wird und anschließend einer geeigneten Temperaturbehandlung, zum Zwecke einer Fixierung, Beschichtung und/oder sonstigen mechanischen und/oder chemischen Behandlung oder Beaufschlagung, unterzogen wird.

24. Keramikvlies, herstellbar nach einem oder mehreren der Ansprüche 1 bis 23.

25. Vorrichtung zur kontinuierlichen Herstellung keramischer Vliesstoffe, umfassend
a) eine Mischvorrichtung, in der Keramikpulver, wäßriges Aminoxid und Cellulose zu einer Suspension gemischt werden;
b) eine Vorrichtung zum Aufkonzentrieren, in der die in a) hergestellte Suspension so lange unter Erwärmen intensiv gemischt, geschert und unter Abdampfen von Wasser transportiert wird, bis eine genau definierte Menge an Wasser abgedampft und eine Suspension von Keramikpulver in einer verformbaren Lösung der Cellulose in wäßrigem Aminoxid entsteht,
c) eine Vorrichtung, die mit der unter b) genannten verbunden ist, worin die Suspension von Keramikpulver in einer verformbaren Lösung der Cellulose in wäßrigem Aminoxid zu keramischen Grünfasern verarbeitet und aus den Grünfasern ein Grünfaservlies gebildet wird, und
d) eine Pyrolysier- und Sintereinrichtung, in der aus dem Grünfaservlies durch Pyrolysieren und Sintern ein keramischer Vliesstoff hergestellt wird.

26. Vorrichtung nach Anspruch 25, **dadurch gekennzeichnet, daß** die Mischvorrichtung ein kontinuierlicher Zwei- oder Mehrwellenapparat mit Misch-, Transport und Scherwirkung ist.

27. Vorrichtung nach Anspruch 25 oder 26, **dadurch gekennzeichnet, daß** im Batchbetrieb die Mischvorrichtung und/oder die Vorrichtung zum Aufkonzentrieren mindestens einen Rührbehälter umfaßt.

28. Vorrichtung nach einem oder mehreren der Ansprüche 25 bis 27, **dadurch gekennzeichnet, daß** die Vorrichtung zum Aufkonzentrieren einen Dünnschichtverdampfer, bevorzugt einen Dünnschichtverdampfer mit einer Welle mit verstellbaren Rotorblättern, umfaßt.

29. Vorrichtung nach Anspruch 25 oder 26, **dadurch gekennzeichnet, daß** die Vorrichtung zum Aufkonzentrieren einen Dickschichtverdampfer umfaßt, der bevorzugt mindestens eine Welle mit Transport- und Scherelementen enthält, wobei besonders bevorzugt an der Apparatewand ebenfalls Transport- und Scherelemente angeordnet sind.

30. Verwendung der nach den Ansprüchen 1 bis 23 erhaltenen Keramikvliese zu Trenn- und Filteraufgaben in den Bereichen der chemischen, energieerzeugenden sowie -recycelnden und Kraftfahrzeugindustrie, der Biotechnologie und Medizintechnik, bevorzugt in der Katalysatorentechnik wie Verbrennungsmotorkatalysator oder in chemischen Reaktoren.

## Claims

1. A process for continuous production of a ceramic nonwoven, said process comprising the steps of:
a) mixing ceramic powder, aqueous amine oxide and cellulose to form a suspension;
b) concentrating the suspension from a), which while undergoing heating is mixed, sheared and transported while undergoing evaporative removal of water until a suspension of the ceramic powder in a formable solution of cellulose in aqueous amine oxide has formed;
c) processing the suspension from b) into ceramic green fibers and forming a web from the green fibers and also drying the web formed from the green fibers;
d) pyrolyzing and sintering the web formed from the green fibers to form the ceramic nonwoven.

2. A process according to claim 1, wherein step a) utilizes a ceramic powder composed of oxides, carbides, borides, nitrides, oxynitrides, sialons and/or of aluminum silicates or their mixtures and/or of ceramic-forming low or high molecular weight compounds and/or sinterable inorganic compounds and/or lead zirconium titanates.

3. A process according to claim 1, wherein step a) utilizes the cellulose in the form of dissolving or paper grade pulp, cotton linters or mixtures thereof.

4. A process according to claims 1 to 3, wherein the amine oxide used is N-methylmorpholine N-oxide.

5. A process according to claim 1, wherein the fraction of cellulose in the suspension generated in step b) is 0.5 % to 12 % by weight and preferably 1.5 % to 8 % by weight, based on the weight of the suspension.

6. A process according to claim 1, wherein the fraction of ceramic powder in step b) is 10 % to 5000 % by weight and preferably 50 % to 3000 % by weight, based on the weight of the cellulose.

7. A process according to claims 1 to 6, wherein the ceramic powder used in step a) has an average grain size which is at least one order of magnitude smaller than the diameter of the dry green fibers from step c).

8. A process according to claim 1, wherein step a) utilizes an ultrasound treatment as well as mixing.

9. A process according to claim 1, wherein step c) produces the ceramic green fibers by a wet-spinning process, a dry-jet wet-spinning process, a trough spinning process, a funnel spinning process, a blow spinning process or a centrifugal spinning process.

10. A process according to claims 1 to 9, wherein the extrusion technique is chosen such that round and/or profiled and/or multilayered and/or hollow ceramic green fibers are obtained.

11. A process according to claims 1 to 10, wherein the amine oxide washoff is realized in the fiber tow assembly.

12. A process according to claim 11, wherein at the end of the tow wash the tow is cut into fibers of defined length and a fibrous web is formed on a foraminous belt, where an aftertreatment fluid is applied if appropriate.

13. A process according to claims 1 to 12, wherein the cutting of the fiber tow is effected directly after spinning and a fibrous web is formed.

14. A process according to claims 1 to 13, wherein the continuous washoff of the amine oxide and if appropriate the application of an aftertreatment fluid is effected in the fibrous web on a foraminous belt.

15. A process according to claims 1 to 14, wherein the resulting fibrous assembly is laid down on a foraminous belt, the amine oxide is washed off and if appropriate an aftertreatment fluid is applied.

16. A process according to claims 1 to 15, wherein the foraminous belt is subdivided into various sections and adjustable squeeze rolls are situated between the sections and the downstream end of the foraminous belt and squeeze off the fibrous assembly.

17. A process according to claims 1 to 16, wherein the moist ceramic green web is dried in a circulating air drying assembly, which is preferably a foraminous belt dryer.

18. A process according to claims 1 to 17, wherein the dry ceramic web is directly further processed in step d) or packed and processed externally or externally processed as pressed fiber.

19. A process according to claims 1 to 18, wherein the ceramic green web is formed in a plurality of layers which differ in the ceramic powder used.

20. A process according to claims 1 to 18, wherein the ceramic green fibrous web in step d) is continuously oven pyrolyzed and sintered to form a ceramic web.

21. A process according to claims 1 to 20, wherein the resulting ceramic web is cooled, saturated with an additional sintering fluid and again transverses a sintering operation in a further oven.

22. A process according to claim 21, wherein the sintering fluid consists of a dispersion of a sinterable powder or of a sinterable sol.

23. A process according to claims 1 to 22, wherein the ceramic web is contacted with functional materials, for example catalysts, and subsequently subjected to a suitable thermal treatment, for the purpose of immobilization, coating and/or other mechanical and/or chemical treatment or application.

24. A ceramic web obtainable according to one or more of claims 1 to 23.

25. A device for continuous production of ceramic nonwovens, comprising
a) a mixing device in which ceramic powder, aqueous amine oxide and cellulose are mixed to form a suspension;
b) a device for concentrating the suspension produced in a), which while undergoing heating is intensively mixed, sheared and transported while undergoing evaporative removal of water until a precisely defined amount of water has been evaporated off and a suspension of a ceramic powder in a formable solution of cellulose in aqueous amine oxide has formed;
c) a device which is connected to that mentioned under b) and in which the suspension of ceramic powder in a formable solution of the cellulose in aqueous amine oxide is processed to form ceramic green fibers and a green fibrous web is formed from the green fibers, and
d) a pyrolyzing and sintering appliance in which a ceramic nonwoven is formed from the green fibrous web by pyrolyzing and sintering.

26. A device according to claim 25, wherein the mixing device is a continuous assembly having two or more shafts and a mixing, transporting and shearing action.

27. A device according to claim 25 or 26, wherein the mixing device and/or the device for concentrating comprises at least one stirred vessel in batch operation.

28. A device according to one or more of claims 25 to 27, wherein the device for concentrating comprises a thin film evaporator, preferably a thin film evaporator having a shaft with adjustable rotor blades.

29. A device according to claim 25 or 26, wherein the device for concentrating comprises a thick film evaporator, which preferably contains at least one shaft with transporting and shearing elements, in which case it is particularly preferable for transporting and shearing elements to be disposed on the apparatus wall as well.

30. The use of the ceramic webs obtained according to claims 1 to 23 for separation and filtration duties in the sectors of the chemical, energy-generating and also -recycling and motor vehicle industry, biotechnology and medical technology, preferably in catalyst technology such as internal combustion engine catalytic converter or in chemical reactors.

## Revendications

1. Procédé en vue de la fabrication en continu d'un non tissé en céramique, **caractérisé en ce qu'**il comprend les étapes suivantes:
a) le mélange de poudre céramique, d'oxyde d'amine aqueux et de cellulose, de telle sorte qu'il se forme une suspension;
b) la concentration de la suspension de a), qui est mélangée avec échauffement, cisaillée et transportée avec évaporation de l'eau, jusqu'à ce qu'une suspension de la poudre céramique se soit formée dans une solution déformable de cellulose dans de l'oxyde d'amine aqueux,
c) la mise en oeuvre de la suspension de b) pour former des fibres vertes céramiques et la formation d'un non tissé à partir des fibres vertes ainsi que le séchage du non tissé formé à partir des fibres vertes;
d) la pyrolyse et le frittage du non tissé formé à partir des fibres vertes pour former le non tissé céramique.

2. Procédé selon la revendication 1, **caractérisé en ce que**, dans l'étape a), l'on utilise une poudre céramique constituée d'oxydes, de carbures, de borures, de nitrures, d'oxynitrures, de sialons et/ou de silicates d'aluminium ou de leurs mélanges et/ou de composés à poids moléculaire faible et/ou élevé, formant des céramiques, et/ou de composés inorganiques capables de frittage et/ou des titanates de plomb-zirconium.

3. Procédé selon la revendication 1, **caractérisé en ce que**, dans l'étape a), l'on utilise de la cellulose sous la forme de pâte dissolvante ou de pâte chimique, de linters de coton ou de mélanges de ces derniers.

4. Procédé selon les revendications 1 à 3, **caractérisé en ce que** l'on utilise, en tant qu'oxyde d'amine, le N-oxyde de N-méthylmorpholine.

5. Procédé selon la revendication 1, **caractérisé en ce que** la proportion de cellulose dans la suspension produite dans l'étape b) est de 0,5 à 12 % en poids, de préférence, de 1,5 à 8 % en poids, par rapport au poids de la suspension.

6. Procédé selon la revendication 1, **caractérisé en ce que** la proportion de poudre céramique dans l'étape b) est de 10 à 5000 % en poids, de préférence, de 50 à 3000 % en poids, par rapport au poids de la cellulose.

7. Procédé selon les revendications 1 à 6, **caractérisé en ce que** la poudre céramique utilisée dans l'étape a) présente une granulométrie moyenne, qui est inférieure d'au moins un ordre de grandeur au diamètre des fibres vertes sèches provenant de l'étape c).

8. Procédé selon la revendication 1, **caractérisé en ce que** l'on effectue, dans l'étape a), en plus du mélange, un traitement aux ultrasons.

9. Procédé selon la revendication 1, **caractérisé en ce que** les fibres vertes céramiques sont fabriquées dans l'étape c), conformément aux procédés de filature par voie humide, par voie sèche-humide, à cuves, à entonnoir, à soufflage ou à centrifuge.

10. Procédé selon les revendications 1 à 9, **caractérisé en ce que** la technique d'extrusion est sélectionnée de telle sorte que l'on obtienne des fibres céramiques vertes rondes et/ou profilées et/ou multicouches et/ou creuses.

11. Procédé selon les revendications 1 à 10, **caractérisé en ce que** le lavage de l'oxyde d'amine est réalisé dans le faisceau de câbles de fibres.

12. Procédé selon la revendication 11, **caractérisé en ce qu'**à la fin du lavage des câbles, le câble est coupé en fibres d'une longueur définie et **en ce que** l'on forme, sur une bande tamis, un non tissé, où on applique, le cas échéant, un fluide de traitement ultérieur.

13. Procédé selon les revendications 1 à 12, **caractérisé en ce que** la coupe du câble de fibres se fait directement après la filature et **en ce qu'**un non tissé est formé.

14. Procédé selon la revendications 1 à 13, **caractérisé en ce que** le lavage continu de l'oxyde d'amine et, le cas échéant, l'application d'un fluide de traitement ultérieur dans le non tissé se font sur une bande tamis.

15. Procédé selon les revendications 1 à 14, **caractérisé en ce que** le faisceau de fibres qui se forme est déposé sur une bande tamis, **en ce que** l'oxyde d'amine est lavé et, **en ce que**, le cas échéant, un fluide de traitement ultérior est appliqué.

16. Procédé selon les revendications 1 à 15, **caractérisé en ce que** la bande tamis est subdivisée en diverses sections et **en ce qu'**entre les sections et à l'extrémité de la bande tamis se trouvent des rouleaux exprimeurs réglables, grâce auxquels le faisceau de fibres est exprimé.

17. Procédé selon les revendications 1 à 16, **caractérisé en ce que** le non tissé vert céramique humide est séché dans une unité de séchage à circulation d'air, qui est, de préférence, un sécheur à bande tamis.

18. Procédé selon les revendications 1 à 17, **caractérisé en ce que** le non tissé céramique sec est mis en oeuvre directement dans l'étape d) ou emballé et mis en oeuvre d'une manière externe ou est mis en oeuvre d'une façon comprimée en mode externe en tant que fibres.

19. Procédé selon les revendications 1 à 18, **caractérisé en ce que** le non tissé vert en céramique est formé en plusieurs couches, qui se différencient de la poudre céramique utilisée.

20. Procédé selon les revendications 1 à 18, **caractérisé en ce que**, dans l'étape d), le non tissé céramique de fibres vertes subit une pyrolyse en mode continu dans un four et est fritté pour former un non tissé céramique.

21. Procédé selon les revendications 1 à 20, **caractérisé en ce que** le non tissé céramique formé est refroidi, imprégné à l'aide d'un fluide de frittage supplémentaire et passe à nouveau par un processus de frittage dans un four supplémentaire.

22. Procédé selon la revendication 21, **caractérisé en ce que** le fluide de frittage se compose d'une dispersion d'une poudre capable de frittage ou d'un sol capable de frittage.

23. Procédé selon les revendications 1 à 22, **caractérisé en ce que** le non tissé céramique est mis en contact avec des susbtances fonctionnelles, par exemple, des catalyseurs, et est soumis ensuite à un traitement thermique approprié, dans l'optique d'une fixation, d'un revêtement et/ou d'un traitement ou d'une application par voie mécanique et/ou par voie chimique quelconque.

24. Non tissé céramique, que l'on peut fabriquer selon l'une quelconque des revendications 1 à 23.

25. Dispositif en vue de la fabrication en mode continu de non tissés céramiques, comprenant
a) un dispositif de mélange, dans lequel de la poudre céramique, un oxyde d'amine aqueux et de la cellulose sont mélangés pour former une suspension;
b) un dispositif de concentration, dans lequel la suspension fabriquée dans a) est mélangée avec échauffement d'une manière intensive, est cisaillée et est transportée avec évaporation d'eau, jusqu'à ce qu'une quantité d'eau, définie d'une manière précise, soit évaporée et jusqu'à ce qu'il se forme dans l'oxyde d'amine aqueux, une suspension de poudre céramique dans une solution déformable de la cellulose,
c) un dispositif, qui est relié à celui cité sous b), la suspension de poudre de céramique étant mise en oeuvre dans l'oxyde d'amine aqueux dans une solution déformable de la cellulose pour former les fibres vertes céramiques et un non tissé de fibres vertes étant formé à partir des fibres vertes, et
d) un équipement de pyrolyse et de frittage, dans lequel un non tissé céramique est fabriqué par pyrolyse et frittage à partir du non tissé de fibres vertes.

26. Dispositif selon la revendication 25, **caractérisé en ce que** le dispositif de mélange est un appareil continu à deux ou plusieurs arbres produisant un effet de mélange, de transport et de cisaillement.

27. Dispositif selon la revendication 25 ou 26, **caractérisé en ce que**, en cas de fonctionnement en mode discontinu, le dispositif de mélange et/ou le dispositif de concentration comprend au moins un récipient d'agitation.

28. Dispositif selon l'une quelconque ou plusieurs des revendications 25 à 27, **caractérisé en ce que** le dispositif de concentration comprend un évaporateur à couches minces, de préférence, un évaporateur à couches minces avec un arbre ayant des pales de rotor ajustables.

29. Dispositif selon la revendication 25 ou 26, **caractérisé en ce que** le dispositif de concentration comprend un évaporateur à couches épaisses, qui comprend, de préférence, au moins un arbre avec des éléments de transport et de cisaillement, des éléments de transport et de cisaillement étant également disposés, en particulier, de préférence, sur la paroi de l'appareil.

30. Utilisation des non tissés céramiques obtenus selon les revendications 1 bis 23, en vue de tâches de séparation et de filtrage dans les domaines de l'industrie chimique, de l'industrie de la production d'énergie ainsi que de l'industrie du recyclage et de l'industrie automobile, de la biotechnologie et de la technique médicale, de préférence, dans la technique des catalyseurs, comme les catalyseurs pour moteurs à combustion ou dans les réacteurs chimiques.
